# EUROPÄISCHE PATENTANMELDUNG

(11) **EP 0 920 991 A1**
(43) Veröffentlichungstag der Anmeldung: **09.06.1999**
(21) Anmeldenummer: 98122015.5
(22) Anmeldetag: 20.11.1998
(51) Int. Cl.: B32B 27/34, C08L 73/00, F16L 9/133, F16L 9/12, B32B 27/08, C08G 67/02

(54) **Flexible, mehrschichtige Folie mit hoher Steifigkeit, Formstabilität und Knickbruchbeständigkeit**

(30) Priorität: 03.12.1997 DE 19753507
(71) Anmelder: Wolff Walsrode AG, 29655 Walsrode (DE)
(72) Erfinder: Eggers, Holger Dr., 29664 Walsrode (DE); Lund, Klaus Dr., 29664 Walsrode (DE); Brandt, Rainer Dr., 29664 Walsrode (DE); Sperlich, Bernd Dr., 29664 Walsrode (DE)
(74) Vertreter: Feldhues, Michael L.F., Dr.

(57) **Zusammenfassung**

Die vorliegende Erfindung betrifft siegelbare ungereckte Mehrschichtfolie, bestehend aus einer ein- oder mehrlagigen zusammenhängenden Schichtenfolge (I) an der Außenseite der Folie, einer ebenfalls wenigstens einlagigen zusammenhängenden Schichtenfolge (II), genannt Siegelschicht, an der anderen Außenseite der Folie sowie gegebenenfalls einer ebenfalls ein- oder mehrlagigen haftvermittelnden Schichtenfolge (III) zwischen den Schichtenfolgen (I) und (II), wobei die Mehrschichtfolie dadurch gekennzeichnet ist, daß die Schichtenfolge (I) mindestens eine Schicht (i) aus einem linearen alternierenden Copolymer (1) aus Kohlenmonoxid und wenigstens einen, ethylenisch ungesättigten Olefin *sowie gegebenenfalls eine oder mehrere polyamidhaltige Schichten (ii) enthält*, dadurch gekennzeichnet, daß das Verhältnis zwischen den Dicken der Schichtenfolge (I) und der gesamten Mehrschichtfolie nicht größer als 0,6 und nicht kleiner als 0,15 ist, daß die Gesamtdicke der Mehrschichtfolie nicht unter 50 und nicht über 300 µm beträgt, und daß mindestens ein Schmelzpunkt, bestimmt mit der DSC-Methode nach ASTM 3418, einer in der Schichtenfolge (II) enthaltenen polymeren Komponente um wenigstens 50°C niedriger liegt als mindestens ein Schmelzpunkt, bestimmt mit der DSC-Methode nach ASTM 3418, eines in der Schichtenfolge (I) enthaltenen Polymers.

## Beschreibung

Die vorliegende Erfindung betrifft eine mehrschichtige siegelbare Folie, die aus einer festigkeitsbringenden Schichtenfolge, einer Siegelschicht sowie gegebenenfalls einer dazwischen befindlichen Verbindungsschicht besteht. Die festigkeitsbringende Schichtenfolge kann selbst ein- oder mehrlagig ausgeführt sein und enthält eine Schicht aus einem linearen, alternierend aufgebauten Copolymer aus Kohlenmonoxid und wenigstens einem ethylenisch ungesättigten Olefin, welche gegebenenfalls mit polyamidhaltigen Schichten coextrudiert sein kann. Auch die Siegelschicht kann mehrlagig ausgeführt sein. Dadurch, daß die erfindungsgemäße Mehrschichtfolie auch bei Einwirkung von Wärme und Feuchtigkeit eine hohe Steifigkeit und Formstabilität beibehält, zeichnet sie sich durch eine hervorragende Maschinengängigkeit auf üblichen Verpackungsmaschinen aus. Zusätzlich zeichnet sich die Folie durch eine sehr hohe Knickbruchtestigkeit aus. Die Erfindung umfaßt auch die Anwendung der genannten Folie auf Maschinen zur Herstellung von allseitig versiegelten Schlauchbeuteln sowie auf Maschinen zur Herstellung von tiefgezogenen Muldenverpackungen und die Verwendung der Folie für die Verpackung von Lebensmitteln.

Ein Großteil der Verpackungen von Lebensmitteln, Snacks und ähnlichen Gütern wird auf Schlauchbeutelmaschinen hergestellt. Die Funktionsweise solcher Maschinen sowie der Aufbau auf solchen Maschinen bevorzugt verarbeiteter Folien ist beispielsweise in *The Wiley Encyclopedia of Packaging Technology* (Hrg. M. Bakker, D. Eckroth; John Wiley & Sons, 1986) sowie in *Nentwig* (Joachim Nentwig: Kunststoff-Folien, Carl Hanser Verlag 1994, München) niedergelegt.

Schlauchbeutelmaschinen formen aus einer kontinuierlich zulaufenden Folie einen Schlauch, führen das Füllgut darin ein und trennen nach einer sich daran anschließenden allseitigen Versiegelung der Folie um das Füllgut einen aus einem durchgehenden Folienabschnitt beutelförmig gebildeten, mit dem Gut gefüllten, Container vom zulaufenden Schlauchende ab. Der genannte Container wird im folgenden als Schlauchbeutel bezeichnet. Aus ökonomischen Gründen sind hohe Maschinenlaufgeschwindigkeiten für die Realisierung dieser Vorgänge vorteilhaft. Dies stellt besondere Anforderungen an die verwendete flexible Verpackungsfolie.

Daneben erfordert das Füllgut in vielen Fällen einen möglichst geringen Austausch der in der Verpackung enthaltenen Atmosphäre mit der die Packung umgebenden Luft. So kann etwa im Falle sauerstoffempfindlicher Füllgüter das Innere der Packung mit einer sauerstoffarm modifizierten Atmosphäre ausgestattet sein. Ebenso kann aber auch das Eindringen von Wasserdampf bei feuchteempfindlichen Gütern nachteilig sein. Zur Aufrechterhaltung der gewünschten Atmosphärenbedingungen muß die Verpackungsfolie daher einerseits eine hohe Diffusionsbarriere gegenüber solchermaßen unerwünschten Gasen darstellen, andererseits darf die Verpackung aber auch keine makroskopischen Undichtigkeiten, etwa Poren, aufweisen, die einen konvektiven Luftstrom in die Verpackung hinein bzw. aus der Verpackung heraus zulassen.

Eine wesentliche Voraussetzung für hohe Abpackgeschwindigkeiten auf Schlauchbeutelmaschinen ist eine hohe Steifigkeit der eingesetzten Folie. Als geeignetes Maß für die Steifigkeit einer Folie kann der E-Modul nach DIN EN ISO 527 herangezogen werden. Die hohe Steifigkeit ist erforderlich, um die Folie trotz der auf sie einwirkenden hohen Kräfte möglichst deformationsarm durch die Maschine hindurchzuziehen. So führt beispielsweise eine Deformation der Folie im zu versiegelnden Bereich zu einer unregelmäßigen Ausführung der Siegelnähte. Dies kann neben einem geminderten optischen Erscheinungsbild der Folie unter Umständen auch zu Undichtigkeiten, etwa beim Einsiegeln von Falten, und damit zu einem Versagen der Funktion der mittels der Folie so geformten Verpackung führen.

Besondere Anforderungen ergeben sich bei sogenannten Horizontalen Schlauchbeutelmaschinen, die eine Versiegelung der Folie in Maschinenlaufrichtung über ein beheiztes, angetrieben rotierendes Walzenpaar realisieren, durch welches die zu versiegelnden Bereiche der Folie hindurchgeführt werden, hinsichtlich des thermischen Erweichungsverhaltens der Folie. Die Folie wird vor Erreichen der Siegelwalzen auf geeignete Weise vorgeheizt. Im Bereich zwischen Vorheizung und Versiegelung ist die Folie thermisch erweicht und neigt damit in besonderem Maße zu einem unregelmäßigen Einlaufen in die Siegelwalzen und damit zu unregelmäßig ausgeführten Siegelnähten. Für eine optimale Verarbeitbarkeit der Folie werden hier eine bei niedrigen Temperaturen schmelzende Siegelschicht sowie eine bei hohen Temperaturen möglichst steife und formstabile Stützschicht gefordert.

Kommt es auf den genannten Maschinen zu einem vorübergehenden Stillstand, so stehen die von der zulaufenden Rolle bereits abgewickelten Folienabschnitte in länger andauerndem Kontakt mit der umgebenden Atmosphäre. In vielen Fällen, insbesondere bei vorherrschendem warmen und feuchten Klima, kann es bei bestimmten Folien zur Aufnahme von Feuchtigkeit aus der Umgebungsluft und damit einhergehend einem Erweichen sowie unter Umständen auch zu einem Einrollen der Folie aufgrund der ungleichmäßigen Volumenzunahme der inneren und äußeren Schichten oder zu einem Schrumpf oder einer Ausdehnung der Folie durch die Aufnahme von Feuchtigkeit oder eine damit einhergehende Strukturänderung wie etwa eine Nachkristallisation kommen. Diese Störungen können sich so gravierend auf die Funktion der Verpackungsmaschine auswirken, daß eine anschließende Weiterverarbeitung der freiliegenden Folienbereiche nach solchen Stillständen nicht mehr gegeben ist. Das Einrollen der Folie läßt sich mit dem im Zusammenhang mit der Charakterisierung der erfindungsgemäßen Beispiele definierten Meßprinzip qualitativ bewerten.

Üblicherweise werden die auf die oben beschriebene Weise hergestellten Beutel zum Transport in einer, eine größere Anzahl von Packungen enthaltende, Transportverpackung zusammengefaßt. Eine typisches Beispiel einer solchen Transportverpackung ist ein aus Pappe gefertigter Karton. Das Einfüllen der Packungen in die Transportverpackung sowie der eigentliche Transport üben eine hohe Beanspruchung auf die Verpackungsfolie aus.

Die Packungen bilden in vielen Fällen Falten und Knicke. Durch Erschütterungen beim Einpacken in die Transportverpackung sowie während des Transports wird die Folie wiederholt durch Kräfte beansprucht, die über stoßartigen mechanischen Kontakt zur Innenseite der Transportverpackung oder innerhalb der Transportverpackung zu benachbarten Packungen übertragen werden. Dabei stellt ein solcher Kontakt im Bereich einer Knickfalte eine besondere Beanspruchung dar. So kann es nach einer gewissenen Anzahl solcher Stöße zu einem lokalen Bruch der Folie in der Knickfalte kommen. Es bildet sich auf diese Weise eine Pore, die über die Ermöglichung von Luftaustausch und dadurch bedingt einem Verderb des Füllguts zu einem Versagen der Verpackung führen kann. Der Widerstand, der von einer Folie einer derartigen Beanspruchung entgegengebracht wird, soll im folgenden als Knickbruchfestigkeit bezeichnet werden und läßt sich beispielsweise nach dem im Zusammenhang mit der Charakterisierung der erfindungsgemäßen Beispiele definierten Meßprinzip quantifizieren.

Für die im folgenden beschriebenen Folienaufbauten nach dem Stand der Technik gilt generell, daß bei gleicher Foliendicke eine durch geeignete Wahl eines der genannten Materialen erhöhte Steifigkeit der Folie bzw. bei gleichem Material eine erhöhte Foliendicke in einer verminderten Knickbruchfestigkeit derselben resultieren.

Für die Herstellung der genannten Verpackungen werden aus den aufgeführten Gründen üblicherweise mehrschichtige Folien verwendet, die eine die Folienstabilität gewährleistende, hier als Trägerfilm bezeichnete, Schicht oder Schichtenfolge aufweisen, die üblicherweise auf der Außenseite der Folie liegt, gefolgt von einer Schicht, deren primäre Aufgabe es ist, eine ausreichende Haftung zu der innenliegenden, ein- oder mehrschichtigen, im folgenden zusammengefaßt als Siegelschicht bezeichneten, Schichtenfolge herzustellen.

Um auch im Bereich von Falten eine gute Versiegelung der Packung zu gewahrleisten, ist eine möglichst dicke Siegelschicht vorteilhaft. Ebenso trägt ein dicker Trägerfilm zu einer hohen mechanischen Stabilität der Folie bei. Andererseits muß aus ökonomischen Gründen - zum einen wegen der Materialkosten und zum anderen wegen der geforderten hohen Maschinenlaufgeschwindigkeiten - die Foliendicke moglichst niedrig sein. Ein zu dicker Trägerfilm neigt darüberhinaus in besonderem Maße zum Versagen durch Knickbruch. Günstige Dickenverhältnisse flexibler Folien liegen für Schlauchbeutelfolien je nach Packungsgröße und -inhalt bei etwa 15 bis 25 µm für den Trägerfilm sowie 40 bis 70 µm für die Siegelschicht.

Für die Beschreibung der in den einzelnen Schichten enthaltenen Polymere gilt die Übereinkunft, daß, wenn nicht anderweitig kenntlich gemacht, Kurzzeichen für Kunststoffe nach DIN 7728 bzw. ISO 1043-1987 (E) verwendet werden.

Die Angabe von Schmelzpunkten bezieht sich im folgenden auf den nach ASTM 3418 mit DSC-Analyse (Differential Scanning Calorimetry Analyse) bestimmten Wert.

Bei mehrschichtigen Aufbauten wird die Schichtenfolge durch eine Aneinanderreihung der Kurzzeichen der Polymere der entsprechenden Schichten, voneinander getrennt durch Schrägstriche, wiedergegeben. Die Seite der Siegelschicht ist dabei stets rechts.

Für die Verpackung sauerstoffempfindlicher Güter auf Schlauchbeutelmaschinen werden als Trägerfilm bevorzugt gereckte Polymere wie biaxial oder in Maschinenlaufrichtung monoaxial gerecktes Polyamid (PA) oder biaxial gerecktes Polyethylenterephthalat (PET) verwendet. Als Polyamid wird überwiegend PA6, d.h. Polycaprolactam, aber auch andere PA-Typen wie beispielsweise PA-MXD6, ein Polymerisat aus m-Xylylendiamin und Adipinsäure, eingesetzt. Unter "Polyamid" versteht man im weitesten Sinne polymere Verbindungen, die durch die Säureamid-Gruppe -NH · CO-miteinander verknüpft sind (siehe auch *Kunststoff-Handbuch Band VI*, *Polyamide*, *Carl Hanser Verlag München 1966*). Man unterscheidet zwei Gruppen von Polyamiden Aufbau aus einem Monomer durch Polykondensation von ω-Aminocarbonsäuren oder Polymerisation ihrer Lactame zum Polyamid 6-Typ und solche, die aus zwei Monomeren (Diaminen und Dicarbonsäuren) durch Polykondensation zum Polyamid 66-Typ entstanden sind (*Gnauck, Fründt: Einstieg in die Kunststoffchemie*, *Carl Hanser Verlag München 1991*). Die Kennzeichnung der Polyamide erfolgt durch Zahlen, welche die Anzahl der C-Atome im Ausgangsstoff bzw. - bei zwei Komponenten - im Diamin (erste Zahl) und in der Dicarbonsäure (zweite Zahl) angeben bzw. durch eine Abkürzung der Bezeichnung des Diamins oder der Dicarbonsäure (z.B. PA MXD6 aus dem Diamin m-Xylylendiamin und der Dicarbonsäure Adipinsäure).

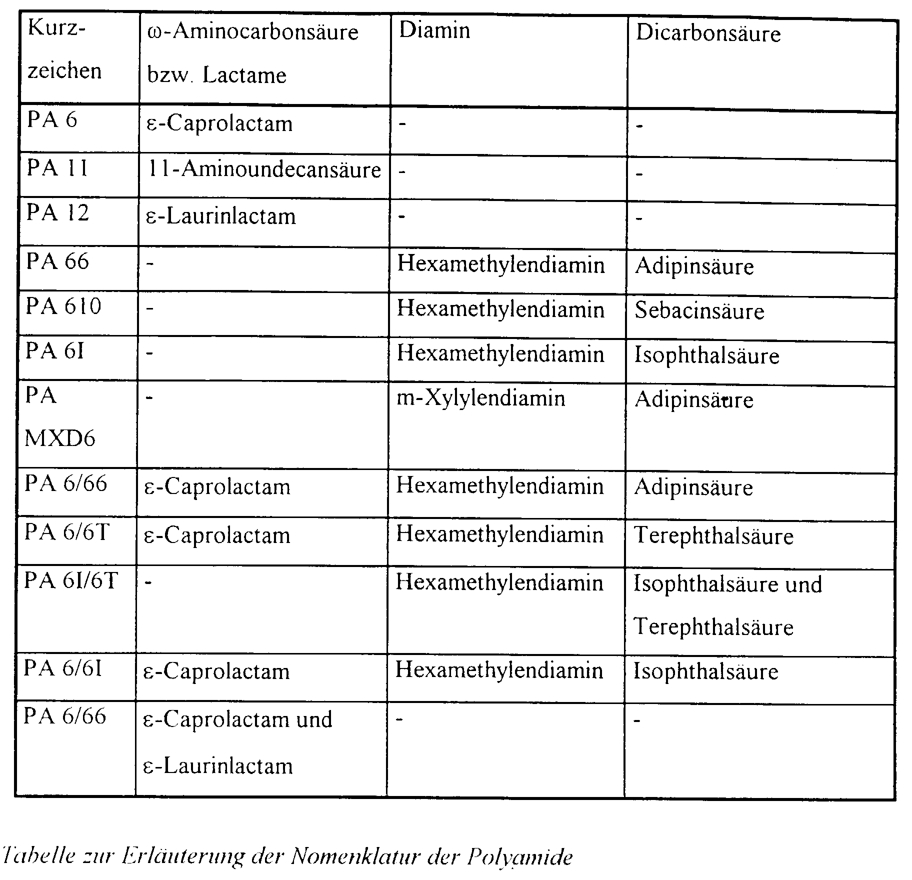

Daneben kommen im Trägerfilm solche Polymere zum Einsatz, die auch ohne Verstreckung eine ausreichend hohe Steifigkeit aufweisen. Hier werden insbesondere Ethylen/Vinylalkohol-Copolymere (EVOH) im Verbund mit Polyamid verwendet, wobei der Trägerfilm in diesen Fällen bevorzugt EVOH in Coextrusion zwischen zwei PA-Schichten, das heißt den Aufbau PA/EVOH/PA, umfäßt und das EVOH bevorzugt 40 bis 85 Mol-% Vinylacetat enthält, die zu mindestens 90% verseift sind. Neben den reinen Materialien werden auch Mischungen, beispielsweise von PA-MXD6 mit PA6, verwendet.

Die Siegelschicht besteht im einfachsten Fall aus einer einzelnen Schicht. Diese Schicht besteht bevorzugt aus Polyolefinen, wie z.B. Polyethylen (LDPE, HDPE) oder Ethylen/α-Olefin-Copolymerisaten (LLDPE), hergestellt mit konventionellen Ziegler-Natta-Katalysatoren bzw. mit Metallocen-Katalysatoren, oder aus aus Olefinen abgeleiteten Polymeren wie z. B. Ethylen/Vinylacetat-Copolymeren (EVA), Ethylen-Copolymerisaten mit ungesättigten Estern (z.B. EBA), Ethylen-Copolymerisaten mit ungesättigten Carbonsäuren (z.B. EAA, EMAA) und Ionomeren. Auch Mischungen aus den genannten Stoffklassen sind zur Erzielung gewünschter Eigenschaftskombinationen üblich. Insbesondere die mit Metallocen-Katalysatortechnik hergestellten Ethylen/α-Olefin-Copolymerisate mit niedrigen Dichten (kleiner 0,915 g/cm³) zeichnen sich als Siegelschichtmaterialien wegen ihrer niedrigen Siegelanspringtemperaturen und des hohen Hot-Tack aus.

Stand der Technik ist auch eine mehrschichtige Ausführung der Siegelschicht. So können die oben genannten Stoffe etwa zur Kostenoptimierung in einer solchen Weise angeordnet sein, daß die auf der Innenseite der Folie liegende, dem Produkt zugewandte, Schicht sich durch einen besonders frühen Siegelbeginn auszeichnet und die sich zur Folienmitte daran anschließende Schicht erst bei höheren Temperaturen schmilzt, jedoch dafür kostengünstiger ist oder durch eine höhere Schmelzefestigkeit die Produzierbarkeit einer solchen Siegelschicht als Blasfolie erst ermöglicht Gegebenenfalls kommen auch haftvermittelnde Polymere aus den genannten Stoffgruppen oder auf deren Basis hergestellte, etwa mit Anhydrid durch Propfüng modifizierte, Polymere zum Einsatz. Beispiele für solche Aufbauten sind die Schichtenfolgen LDPE/EVA oder LDPE/EAA/Ionomer.

Trägerfilm und Siegelschicht werden üblicherweise durch eine haftvermittelnde Schicht miteinander verbunden. Dabei besteht die Möglichkeit, alle Schichten gemeinsam zu coextrudieren, d.h. die Polymere aller Schichten als Schmelzeströme zusammenzuführen und in geschmolzener Form durch eine gemeinsame Düse strömen zu lassen Für dieses Verfahren ist ein extrudierbarer Haftvermittler zur Verbindung des Tragerfilms mit der Siegelschicht erforderlich. Entsprechende Haftvermittler sind nach dein Stand der Technik beispielsweise mit Maleinsäureanhydrid modifizierte Polymere aus der Gruppe umfassend LDPE, LLDPE und EVA, es können aber auch ein EAA oder EMAA als Haftvermittler verwendet werden.

Folien des gleichen Aufbaus lassen sich aber auch durch Extrusionsbeschichtung, das heißt dem Auftrag der Siegelschicht in geschmolzenem Zustand auf den vorgefertigten Trägerfilm, der auf der zu beschichtenden Seite bereits mit dein coextrudierten Haftvermittler oder einem nach der Extrusion aufgetragenen Primer versehen ist, herstellen.

Werden Trägerfilm und Siegelschicht getrennt vorgefertigt, so können sie nach dem Stand der Technik durch Verwendung eines Kaschierklebstoffs verbunden werden. Solche Klebstoffe sind üblicherweise unmittelbar vor dem Auftrag vermischte langkettige Isocyanate und Polyole, die nach dem Auftrag zu Polyurethanen aushärten.

Eine derartige Beschichtung oder Laminierung kann dabei auf derselben Produktionsmaschine vorgenommen werden, auf der auch der Trägerfilm gefertigt wird. Dies ist im allgemeinen ökonomisch vorteilhafter als eine Vorfertigung des Trägerfilms auf einer getrennten Maschine. Im Falle der Verwendung gereckter Trägerfilme ist eine derartige Weiterverarbeitung auf der zur Herstellung des Trägerfilms verwendeten Maschine jedoch nicht von Vorteil.

Neben den oben genannten Polymeren ist auch die Stoffklasse der aliphatischen Polyketone seit längerem bekannt. Sie sind streng lineare und alternierende Polymere aus Kohlenmonoxid und zumindest einem ethylenisch ungesättigten Olefin. Für diese Materialien sind jedoch nur wenige Anwendungen zur Herstellung von Folien bekannt. Offengelegte Anwendungen nutzen ausschließlich die gute Sauerstoffbarriere oder die Hochfrequenzheizbarkeit dieser Materialien aus.

J.G. Bonner und A.K. Powell, *Vortrag Maack Specialty Film '96*, beschreiben einen fünfschichtigen Aufbau PP/Haftvermittler/aliphatisches Polyketon/Haftvermittler/PP als beidseitig siegelbare Folie für die Verpackung von Lebensmitteln. Dieser Aufbau zeichnet sich im wesentlichen durch seine gute Sauerstoffbarriere aus. Für den Einsatz auf schnellaufenden Schlauchbeutelmaschinen ist er wegen des symmetrischen Aufbaus und der hochschmelzenden Siegelmaterialien grundsätzlich ungeeignet.

WO 8607012 beschreibt ein mehrschichtiges Laminat mit wenigstens zwei verschiedenen extrudierbaren Polymeren, wobei zumindest eine Lage ein Polyketon, bevorzugt ein Ethylen/Kohlenmonoxid-Copolymer, enthält und mit einer weiteren, bevorzugt aus einem Halopolymer, bestehenden Schicht, verbunden ist. Diese Folie ist besonders für die Versiegelung durch hochfrequente elektromagnetische Wellen geeignet. Die in dem genannten Aufbau verwendeten Halopolymere wie PVC oder PVDC zeichnen sich zwar durch eine Aufheizbarkeit mit radiofrequenten Wellen aus, sind jedoch aus lebensmittelrechtlichen und ökologischen Gründen für die Lebensmittelverpackung nicht vorteilhaft.

In US 5232786 wird ein mehrschichtiger coextrudierter Aufbau mit mindestens je einem aliphatischen Polyketon und einem Polyamid, Polyvinylchlorid oder Copolyetherester beschrieben. Diese Aufbauten zeichnen sich durch eine geringe Haftung des Verbundes aus. Diese Eigenschaft, sowie die mangelnde Versiegelbarkeit eines solchen Verbundes lassen ihn für den Einsatz als hochbeanspruchte Schlauchbeutelfolie ungeeignet erscheinen.

In US 5077385 wird ein zweischichtiges Laminat beschrieben, in dem eine der Schichten aus einem aliphatischen Polyketon, bevorzugt einem Terpolymer aus Kohlenmonoxid, Ethylen und Propylen, besteht und die andere Schicht durch ein Polypropylen oder Polycarbonat gebildet wird. Das wesentliche Merkmal des beschriebenen Laminats ist die Herstellung des Polyketons aus der Schmelze über eine Abkühlung mit einer Geschwindigkeit von 1°C bis 20°C pro Minute. Auf diese Weise erlangt das Material eine gute Barriere gegen Wasserdampf, Sauerstoff und Kohlendioxid. Die Realisierung eines solchen Abkühlprozesses würde auf Maschinen zur Herstellung einer zur Verarbeitung als Schlauchbeutel geeigneten Folie zu extrem langen Maschinenverweilzeiten und damit sehr teuren Folien führen. Der genannte mehrschichtige Aufbau ist überdies nicht für eine frühsiegelnde Folie geeignet.

Auch Polymermischungen auf Basis von aliphatischen Polyketonen sind in der Patentliteratur offengelegt. So beschreibt WO 09111470 ein homogenes Gemisch aus einem Ethylen/Vinylalkohol-Copolymerisat und einem Copolymer aus Ethylen und Kohlenmonoxid. Das Blend zeichnet sich durch eine gute Sauerstoffbarriere, Erwärmbarkeit durch hochfrequente Strahlung sowie eine gegenüber dem reinen Copolymer aus Ethylen und Kohlenmonoxid verbesserte Schmelzefestigkeit aus und ist daher u.a. für die Verarbeitung als Blasfolie geeignet. Eine solche Polymermischung und deren Verwendung in ein- oder mehrschichtigen Folien wird ebenfalls in US 04965314 beschrieben. Neben den oben genannten Vorteilen einer Hochfrequenzerwärmbarkeit und einer guten Sauerstoftbarriere zeichnet sich eine Folie auf Basis einer solchen Polymermischung durch eine verbesserte Durchstoßfestigkeit aus.

WO 09606889 und EP 00669374 legen daneben Mischungen eines aliphatischen Polyketons mit einem linearen Polyethylen niedriger Dichte (LLDPE) bzw. einem Polyethylen hoher Dichte (HDPE) offen, die sich durch eine verbesserte Barriere sowohl gegenüber Sauerstoff als auch Wasserdampf und Kohlenwasserstoffen auszeichnen. Aus diesen Gründen werden auch zur Aufnahme von Lebensmitteln geeignete Container und Folien aus diesen Materialien beansprucht. Für die hier vorliegende Anwendung sind solche Mischungen wegen des gegenüber dem reinen Copolymer aus Ethylen und Kohlenmonoxid früheren Erweichens von mit LLDPE oder HDPE versetzten aliphatischen Polyketonen bei Wärmeeinwirkung nicht sinnvoll.

Es stellte sich die Aufgabe, eine ungereckte Mehrschichtfolie mit guter Maschinengangigkeit auf typischen Verpackungsmaschinen zur Herstellung von Schlauchbeuteln und dabei hoher Knickbruchfestigkeit bereitzustellen. Für die gute Maschinengängigkeit muß die Folie einseitig unter Temperatureinfluß früh versiegelbar sein aber dennoch insgesamt, auch unter Temperatur- und Feuchtigkeitseinfluß, eine hohe Steifigkeit und Planlage aufweisen. Die Folie soll sich in möglichst wenigen Arbeitsgangen rationell und einfach fertigen lassen und daher keine gereckten Bestandteile enthalten.

Erfindungsgemäß gelang dies durch Bereitstellung einer siegelbaren ungereckten Mehrschichtfolie, bestehend aus einer ein- oder mehrlagigen zusammenhängenden Schichtenfolge (I) an der Außenseite der Folie, einer ebenfalls wenigstens einlagigen zusammenhängenden Schichtenfolge (II), genannt Siegelschicht, an der anderen Außenseite der Folie sowie gegebenenfalls einer ebenfalls ein- oder mehrlagigen haftvermittelnden Schichtenfolge (III) zwischen den Schichtenfolgen (I) und (II), wobei die Mehrschichtfolie dadurch gekennzeichnet ist, daß die Schichtenfolge (I) mindestens eine Schicht (i) aus einem linearen alternierenden Copolymer (1) aus Kohlenmonoxid und wenigstens einem ethylenisch ungesättigten Olefin sowie gegebenenfalls eine oder mehrere polyamidhaltige Schichten (ii) enthält, daß das Verhältnis zwischen den Dicken der Schichtenfolge (I) und der gesamten Mehrschichtfolie nicht größer als 0,6 und nicht kleiner als 0,15 ist, daß die Gesamtdicke der Mehrschichtfolie nicht unter 50 und nicht über 300 µm beträgt, und daß mindestens ein Schmelzpunkt, bestimmt mit der DSC-Methode nach ASTM 3418, einer in der Schichtenfolge (II) enthaltenen polymeren Komponente um wenigstens 50°C niedriger liegt als mindestens ein Schmelzpunkt, bestimmt mit der DSC-Methode nach ASTM 3418, eines in der Schichtenfolge (I) enthaltenen Polymers.

Die erfindungsgemäße Mehrschichtfolie ist in einer besonders bevorzugten Form so aufgebaut, daß das Verhältnis zwischen den Dicken der Schichtenfolge (I) und der gesamten erfindungsgemäßen Mehrschichtfolie nicht größer als 0,4 und nicht kleiner als 0,2 ist.

Die Gesamtdicke der erfindungsgemäßen Mehrschichtfolie liegt in einer besonders bevorzugten Ausführung nicht unter 60 und nicht über 250 µm.

In einer möglichen Ausführung der erfindungsgemäßen Mehrschichtfolie ist eine der oder sind beide Schichtenfolgen (I) und (II) bedruckt.

Die Schichtenfolge (I) der erfindungsgemäßen Folie ist im einfachsten Fall aus nur einer Schicht (i) des linearen alternierenden Copolymers (1) aus Kohlenmonoxid und wenigstens einem ethylenisch ungesättigten Olefin ausgeführt. Die Schichtenfolge (I) kann aber auch zur Verbesserung der Kaschier- oder Bedruckbarkeit mehrlagig ausgeführt sein. Bevorzugt enthält (I) in diesen Fällen neben einer oder mehreren Schichten (i), die ein Copolymer (1) enthalten, auch wenigstens eine polyamidhaltige Schicht (ii). In besonders bevorzugter Form enthält (I) nur eine Schicht (i) enthaltend ein lineares alternierendes Copolymer (1) aus Kohlenmonoxid und wenigstens einem ethylenisch ungesättigten Olefin, die beidseitig von polyamidhaltigen Schichten (ii) begrenzt wird. In einer hieraus wiederum besonders bevorzugten Form ist die Schicht (i) beidseitig von je nur einer polyamidhaltigen Schicht (ii) begrenzt. In einer daraus wiederum besonders bevorzugten Form sind die Schichten (ii) hinsichtlich der materiellen Zusammensetzung und der Dicke auf beiden Seiten der Schicht (i) gleich.

In einer bevorzugten Form einer mehrlagigen Ausführung der Schichtenfolge (I) wird (I) durch Coextrusion hergestellt.

Das in wenigstens einer Schicht (i) enthaltene lineare alternierende Copolymer (1) aus Kohlenmonoxid und wenigstens einem ethylenisch ungesättigten Olefin besteht in bevorzugter Form aus Kohlenmonoxid und einem oder mehreren Olefinen aus der Gruppe umfassend Ethylen und C₃- bis C₁₀ -Alkene wie beispielsweise Propylen, 1-Buten, 2-Buten, 1-Penten, 1-Hexen, 1-Octen, 1-Nonen, 1-Decen. In einer besonders bevorzugten Form ist (1) ein Terpolymer aus Kohlenmonoxid, Ethylen und Propylen und in einer hieraus wiederum besonders bevorzugten Form ein solches Terpolymer aus Kohlenmonoxid, Ethylen und Propylen mit in der Polymerkette statistisch verteilten Monomereinheiten des Ethylen (A) und Propylen (B), in dem das stöchiometrische Verhältnis B/A dieser monomeren Einheiten nicht über 0,5 beträgt.

Eine solche Schicht (i) kann daneben auch weitere thermoplastische Polymere als Mischkomponenten enthalten. Hierfür sind insbesondere Ethylen/Vinylalkohol-Copolymerisate und/oder Polyamid geeignet. Daneben kann das Copolymer (1) auch nichtpolymere Zusätze enthalten Beispiele hierfür sind Antistatika, Gleitmittel, Antiblockmittel, Pigmente oder andere feste Füllstoffe jeglicher Art.

Die polyamidhaltigen Schichten (ii) enthalten bevorzugt Polyamid 6, Polyamid 10, Polyamid 12, Polyamid 66, Polyamid 610, Polyamid 6I, Polyamid 6/12, Polyamid 6/66, Polyamid 6I/6T, Polyamid MXD6, Polyamid 6/6I, Polyamid 6/6T oder Mischungen daraus. In besonders bevorzugter Form werden Mischungen aus den genannten Polyamiden mit mindestens 80 Gew.-% Polyamid 6, bezogen auf das Gesamtgewicht der Mischung, eingesetzt.

Die polyamidhaltigen Schichten (ii) der erfindungsgemäßen Folie können daneben auch übliche Additive wie Gleitmittel, Pigmente oder andere feste Füllstoffe jeglicher Art enthalten. Besonders geeignet sind feste anorganische oder organische Partikel mit einer Größe unterhalb von 1 µm zur Steuerung der Steifigkeit und Sauerstoffdurchlässigkeit der polyamidischen Schichten (ii).

Die Siegelschicht (II) besteht in bevorzugter Form aus den üblicherweise als Siegelmedium verwendeten Polymeren. Dies sind beispielsweise Polyethylen (LDPE und HDPE) oder Polypropylen (PP). Daneben können Ethylen/α-Olefin-Copolymerisate (LLDPE) verwendet werden. Sie können entweder mit konventionellen Ziegler-Natta-Katalysatoren oder mit Metallocen-Katalysatoren hergestellt werden. Letztere weisen den für die oben beschriebene Anwendung wichtigen Vorteil eines niedrigen Kristallitschmelzpunktes auf. Daneben können andere Copolymerisate des Ethylens wie Ethylen/Propylen-Copolymere, Ethylen/Vinylacetat-Copolymere (EVA), Ethylen-Copolymerisate mit ungesättigten Estern (EBA), Ethylen-Copolymerisate mit ungesättigten Carbonsäuren (EAA, EMAA) und Ionomere zum Einsatz kommen.

Zur Erzielung besonderer Eigenschaften können die oben genannten in die Siegelschicht Eingang findenden Polymere auch in Form von Mischungen untereinander verwendet werden.

Die erfindungsgemäße Folie kann auch eine mehrschichtig ausgeführte Siegelschicht (11) enthalten. In bevorzugter Form sind in einer solchen Ausführung die einzelnen Lagen der Siegelschicht (II) in einer solchen Weise angeordnet, daß die auf der Innenseite der Folie liegende, dem Produkt zugewandte, Schicht (iii) Polymere mit niedrigerem Schmelzpunkt enthält als die sich daran zur Folienmitte hin anschließende Schichtenfolge (iv) der Siegelschicht (II). In einer anderen bevorzugten Form einer mehrschichtigen Ausführung der Siegelschicht (II) kann die Siegelschicht zusätzlich eine oder mehrere haftvermittelnde Lagen (v) zwischen der eigentlichen, früh aufschmelzenden Siegellage (iii) und der zur Folienmitte hin gelegenen Schichtenfolge (iv) der Siegelschicht (II) enthalten. Dabei wird die Schichtenfolge (II) in solchen Fällen bevorzugt durch Coextrusion gefertigt, d.h. die Polymere aller Schichten aus (iii), (iv) und (v) werden als Schmelzeströme zusammengeführt und strömen in geschmolzener Form durch eine gemeinsame Düse. Für dieses Verfahren hat die Schichtenfolge (II) bevorzugt den Aufbau (iv)/(v)/(iii) oder (iv)/(iii). Darin enthält die in der dreischichtigen Version enthaltene Schicht (v) einen extrudierbaren Haftvermittler (2). Als solche werden bevorzugt modifizierte Polyolefine eingesetzt. In bevorzugter Form sind dies Polyolefine mit Carboxylgruppen, wie z.B. Polyethylen, Polypropylen, Ethylen/α-Olefin-Copolymerisate oder Ethylen/Vinylacetat-Copolymerisate. Diese sind mit mindestens einem Monomer aus der Gruppe der α,β-einfach ungesättigten Dicarbonsäuren, wie beispielsweise Maleinsäure, Fumarsäure, Itaconsäure oder deren Säureanhydride, Säureester, Säureamide und Säureimide, gepfropft. Als extrudierbare Haftvermittler (2) können daneben Copolymerisate von Ethylen mit α,β-einfach ungesättigten Dicarbonsäuren, wie Acrylsäure, Methacrylsäure und/oder deren Metallsalze mit Zink oder Natrium und/oder deren Alkyl(C₁-C₄)ester oder entsprechende Pfropfpolymere auf Polyolefine wie z.B. Polyethylen, Polypropylen oder Ethylen/α-Olefin-Copolymerisate, die mit einem Monomer der genannten ungesättigten Säuren pfropfpolymerisiert sind, zum Einsatz kommen. Besonders bevorzugt sind daraus Polyolefine wie Ethylen/α-Olefin-Copolymerisate mit aufgepfropftem α,β-einfäch ungesättigten Dicarbonsäureanhydrid, insbesondere Maleinsäureanhydrid.

Vorzugsweise werden die Polymere in der Schichtenfolge (II) so ausgewählt, daß mindestens ein Schmelzpunkt, bestimmt mit der DSC-Methode nach ASTM 3418. einer in der Schichtenfolge (II) enthaltenen polymeren Komponente um wenigstens 80°C, in besonders bevorzugter Form um wenigstens 100° niedriger liegt als mindestens ein Schmelzpunkt, bestimmt mit der DSC-Methode nach ASTM 3418, eines in der Schichtenfolge (I) enthaltenen Polymers.

Alle oder einzelne Lagen der Siegelschicht (II) können zusätzlich mit Additiven ausgestattet sein, die die Funktionalität der Folie verbessern. Beispiele sind als Antiblockmittel bekannte feste anorganische Partikel, die aus der äußeren Oberfläche der Siegelschicht hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat und dergleichen. Bevorzugt kommt daraus Siliciumdioxid zum Einsatz. Wirksame Mengen liegen im Bereich von 0,1 bis 2 Gew-%, vorzugsweise 0,1 bis 0,8 Gew-%. Die mittlere Teilchengröße liegt zwischen 1 und 10 µm, bevorzugt 2 und 7 µm, wobei hier Teilchen mit kugelförmiger Gestalt besonders geeignet sind. In mehrlagigen Siegelschichten werden diese Partikel bevorzugt nur in der äußeren Schicht (iii) eingesetzt.

Andere Additive, die die Gleitfähigkeit der Folie, auch in Zusammenwirken mit den genannten festen Partikeln, verbessern und in einer bevorzugten Form in einer der Lagen der Schichtenfolge (II) enthalten sind, sind die üblicherweise als Gleitmittel bezeichneten höheren aliphatischen Säureamide, höhere aliphatische Säureester, Wachse, Metallseifen sowie Polydimethylsiloxane. Die wirksame Menge an Gleitmittel liegt im Bereich von 0,01 bis 3 Gew-%, vorzugsweise 0,02 bis 1 Gew-%. Besonders geeignet ist der Zusatz von höheren aliphatischen Säureamiden im Bereich von 0,01 bis 0,25 Gew-%. Ein insbesondere geeignetes aliphatisches Säureamid ist Erucasäureamid.

Die Schichtenfolgen (I) und (II) sind in bevorzugter Form durch eine ein- oder mehrschichtige haftvermittelnde Schichtenfolge (III) verbunden. Dabei besteht die Möglichkeit, alle Schichtenfolgen (I), (II) und (III) gemeinsam zu coextrudieren, d.h. die Polymere aller Schichten als Schmelzeströme zusammenzuführen und in geschmolzener Form durch eine gemeinsame Düse strömen zu lassen. Für dieses Verfahren ist die Schichtenfolge (III) bevorzugt einlagig und enthält einen extrudierbaren Haftvermittler (3). Als solche werden bevorzugt modifizierte Polyolefine eingesetzt. In bevorzugter Form sind dies Polyolefine mit Carboxylgruppen, wie z.B. Polyethylen, Polypropylen, Ethylen/α-Olefin-Copolymerisate oder Ethylen/Vinylacetat-Copolymerisate. Diese sind mit mindestens einem Monomer aus der Gruppe der α,β-einfach ungesattigten Dicarbonsäuren, wie beispielsweise Maleinsäure, Fumarsäure, Itaconsaure oder deren Säureanhydride, Säureester, Säureamide und Säureimide, gepfropft.

Als extrudierbare Haftvermittler (3) können daneben Copolymerisate von Ethylen mit α,β-einfach ungesättigten Dicarbonsäuren, wie Acrylsäure, Methacrylsäure und/oder deren Metallsalze mit Zink oder Natrium und/oder deren Alkyl(C₁-C₄)ester oder entsprechende Pfropfpolymere auf Polyolefine wie z.B. Polyethylen, Polypropylen oder Ethylen/α-Olefin-Copolymerisate, die mit einem Monomer der genannten ungesättigten Säuren pfropfpolymerisiert sind, zum Einsatz kommen. Besonders bevorzugt sind daraus Polyolefine wie Ethylen/α-Olefin-Copolymerisate mit aufgepfropftem α,β-einfäch ungesättigten Dicarbonsäureanhydrid, insbesondere Maleinsäureanhydrid.

Der extrudierbare Haftvermittler (3) kann in einer Ausführung der erfindungsgemäßen Folie, in der die Schichtenfolge (I) keine polyamidhaltigen Schichten (ii) enthält und die Schichtenfolge (III) einlagig ist, auch ein Polymer aus der Gruppe der linearen alternierenden Copolymere aus Kohlenmonoxid und wenigstens einem ethylenisch ungesättigten Olefin, in einer bevorzugten Form ein Copolymer aus Kohlenmonoxid und einem oder mehreren Olefinen aus der Gruppe umfassend Ethylen und C₃- bis C₁₀-Alkene wie beispielsweise Propylen, 1-Buten, 2-Buten, 1-Penten, 1-Hexen, 1-Octen, 1-Nonen, 1-Decen, in einer besonders bevorzugten Form ein Terpolymer aus Kohlenmonoxid, Ethylen und Propylen und in einer hieraus wiederum besonders bevorzugten Form ein solches Terpolymer aus Kohlenmonoxid, Ethylen und Propylen mit in der Polymerkette statistisch verteilten Monomereinheiten des Ethylen (A) und Propylen (B) sein, in dem das stöchiometrische Verhältnis B/A dieser monomeren Einheiten in dieser besonders bevorzugten Form größer ist als das Verhältnis B/A der monomeren Einheiten im Copolymer (1) der an die einlagige Schichtenfolge (III) angrenzenden Schicht (i).

Die erfindungsgemäße Folie läßt sich auch durch Extrusionsbeschichtung, das heißt per Auftrag der Schichtenfolge (II) und Gegebenenfalls (III) in geschmolzenem Zustand auf die vorgefertigten Schichtenfolgen (I) und gegebenenfalls (III) herstellen

Daneben kann die erfindungsgemäße Folie durch separate Vorfertigung der Schichtenfolgen (I) und (II) hergestellt werden. Als haftvermittelnde Schichtenfolge (III) kommt in solchen Fällen eine einlagige Schicht eines etwa mit einem Walzenauftragswerk entweder auf den Trägerfilm oder auf die Siegelschicht aufzubringenden Kaschierklebstoffes (4) zum Einsatz. Solche Klebstoffe (4) sind üblicherweise auf Acrylaten, Polyurethanen oder Polyesterurethanen basierende Systeme.

Durch den Einsatz der erfindungsgemäßen Schichtenfolge gelingt es überraschenderweise, eine ungereckte Folie bereitzustellen, die eine hohe Steifigkeit bei gleichzeitig ebenfalls hoher Knickbruchfestigkeit aufweist. Es war nicht zu erwarten, daß sich die Folie neben diesen Eigenschaften zusätzlich gegenüber Folien nach dem Stand der Technik auch noch durch eine geringere Erweichung bei Einwirkung von Wärme oder Feuchtigkeit sowie ein deutlich geringeres Einrollen unter dem Einfluß von Feuchtigkeit auszeichnet.

Die Folie ist damit insbesondere für die bei Horizontalen Schlauchbeutelmaschinen auftretende Wärmebeanspruchung in der Siegelstation bei hohen Maschinenlaufgeschwindigkeiten sowie die weitere Verwendung in Form eines mechanisch beanspruchten Schlauchbeutels geeignet. Die Folie zeichnet sich daneben durch ein breites Verarbeitungsfenster in unterschiedlichen Klimata aus. Sie verhält sich gegenüber Maschinenstillständen erheblich unempfindlicher als Folien nach dem Stand der Technik.

Überraschenderweise zeichnet sich die erfindungsgemäße ungereckte Folie wegen ihrer Thermoformbarkeit und des gegenüber entsprechenden Folien nach dem Stand der Technik besseren Eigenschaftsbildes aus Steifigkeit und Knickbruchfestigkeit sowie der deutlich niedrigeren Empfindlichkeit gegenüber dem in Abpackbetrieben oft vorherrschenden warmen und feuchten Klima und der damit einhergehenden geringeren Neigung zum Einrollen und Erweichen auch in hohem Maße für den Einsatz auf Thermoform-Füll-Siegel-Maschinen aus

Gegenstand der Erfindung ist daher auch die Verwendung der Folie zur Herstellung von Beuteln auf Schlauchbeutelmaschinen sowie als Mulden- oder Deckelfolie in Thermoform-Füll-Siegel-Maschinen.

Die Folie läßt sich rationell fertigen, möglich ist eine Herstellung in einem Arbeitsgang. Insbesondere ist zum Erreichen der notwendigen Steifigkeit keine getrennte Vorfertigung eines Trägerfilms und dessen mono- oder biaxiale Verstreckung erforderlich`.

Der Gegenstand der Erfindung wird anhand der folgenden Beispiele näher erläutert:

### Beispiele

### Beispiel 1

Ein lineares alternierendes Terpolymer aus Kohlenmonoxid sowie Ethylen und 5 Gew-% Propylen, bezogen auf das gesamte Polymergewicht, mit einem Schmelzpunkt von 220°C wurde in einem üblichen Dreizonenextruder aufgeschmolzen und auf eine Temperatur von 250°C gebracht. Das Terpolymer hat einen Schmelzflußindex (MFR), gemessen nach ISO 1133 bei 240°C und 2,16 kg, von 5 g/10 min. Das geschmolzene Terpolymer wurde dann als Flachfolie auf eine Dicke von 20 µm ausgezogen, indem es kontinuierlich durch eine ebenfalls auf 250°C temperierte Breitschlitzdüse auf eine rotierende Gießwalze mit einer Oberflächentemperatur von 100°C aufgebracht wurde. Die so gewonnene Folie wurde anschließend auf Raumtemperatur abgekühlt, wieder auf 60°C erwärmt und in diesem Zustand mit einem lösemittelfreien Klebstoff, bestehend aus einem Polyol und einem Diisocyanat in einem für eine Vernetzung zu einem Polyurethan geeigneten stöchiometrischen Verhältnis, per Walzenauftrag mit einem Flächengewicht von 2 g/m² beschichtet. Der klebstoffbeschichteten Seite dieses Films, des Trägerfilms, wurde anschließend eine weitere, in einem vorhergegangenen Arbeitsgang hergestellte, Folie, die Siegelschicht, zugeführt, so daß beide Folien unter Druck und ebenfalls bei 60°C in einem Walzenspalt zusammengefügt werden konnten. Die Siegelschicht war 50 µm dick und bestand aus einem unter Verwendung von Metallocen-Katalysatoren hergestellten Ethylen/Octen-Copolymerisat (LLDPE) mit einer Dichte von 902 g/cm³ und einem Schmelzpunkt von 100°C sowie einem MFR von 1 g/10min bei 190°C und 2,16 kg.

### Beispiel 2

Das in Beispiel 1 genannte Terpolymer aus Kohlenmonoxid, Ethylen und Propylen wurde in einem Extruder aufgeschmolzen und bis zu einer Temperatur von 250°C erwärmt. In weiteren Extrudern wurden getrennt jeweils ein mit Maleinsäureanhydrid durch Propfüng modifiziertes Ethylen/Buten-Copolymerisat (LLDPE) als Haftvermittler mit einer Dichte von 910 g/cm³ und einem MFR von 4,4 g/10 min bei 190°C und 2,16 kg und einem Schmelzpunkt von 124°C, ein LDPE mit einer Dichte von 920 g/cm³, einem Schmelzpunkt von 108°C und einem MFR von 1 g/10 min bei 190°C und 2,16 kg sowie schließlich ein EVA mit einem Gewichtsanteil von 5% Vinylacetat bezogen auf das Gesamtgewicht des Polymers, einem Schmelzpunkt von 101°C und einem MFR von 2 g/10 min bei 190°C und 2,16 kg aufgeschmolzen und auf eine Temperatur von 250°C erwärmt. Die vier Schmelzeströme wurden dann in einer gemeinsamen Ringdüse zusammengeführt und zu einer schlauchförmigen Folie extrudiert. Der Folienschlauch wurde mit üblichen in der Blasfolientechnik verwendeten Methoden zu einer flachen Folie weiterverarbeitet. Die Folie hat damit die Schichtenfolge Polyketon / Haftvermittler / LDPE / EVA, wobei die Dicken in der genannten Reihenfolge 20, 8, 27 und 15 µm betragen.

### Beispiel 3

Das in Beispiel 1 genannte Terpolymer aus Kohlenmonoxid, Ethylen und Propylen sowie der in Beispiel 2 genannte Haftvermittler wurden bei 250°C durch eine Flachdüse coextrudiert und in der in Beispiel 1 beschriebenen Weise zu einem flachen Trägerfilm verarbeitet. Dabei hat das Terpolymer eine Dicke von 20 µm und die Haftvermittlerschicht eine Dicke von 8 µm. In einem weiteren Verarbeitungsschritt wird die mit dem Haftvermittler beaufschlagte Seite des Trägerfilms in einem Walzenspalt mit einem geschmolzenen EVA mit einem Gewichtsanteil von 5% Vinylacetat bezogen auf das Gesamtgewicht des Polymers, einem Schmelzpunkt von 101°C und einem MFR von 7 g/10 min bei 190°C und 2,16 kg in einer Dicke von 42 µm beschichtet. Die Temperatur des EVA beträgt bei diesem Vorgang 280°C.

### Vergleichsbeispiel 4

Polyamid 6 mit einem Kristallitschmelzpunkt von 220°C und einer relativen Viskosität in 98%-iger Schwefelsäure von 3,6 wurde auf die in Beispiel 1 beschriebene Weise zu einem ebenfalls 20 µm dicken Tragerfilm extrudiert und auf die dort ebenfalls beschriebene Weise zu einem Laminat mit der gleichen Siegelschicht wie in Beispiel 1 weiterverarbeitet.

### Vergleichsbeispiel 5

Ein Trägerfilm mit der Schichtenfolge PA/EVOH/PA in den Dicken 12, 6 und 12 µm wird durch Flachfilmcoextrusion entsprechend dem in Beispiel 3 genannten Verfahren hergestellt. Das verwendete Polyamid ist das Polyamid 6 aus dem Vergleichsbeispiel 4, das EVOH ein Copolymer aus monomeren Einheiten des Ethylen und des Vinylalkohols, wobei der Gewichtsanteil des Ethylen bezogen auf das gesamte Polymer 38 Mol-% beträgt und das EVOH einen Schmelzpunkt von 173°C sowie einen MFR von 3,2 bei 210°C und 2,16 kg aufweist. Der so gefertigte Trägerfilm wird auf die in Beispiel 1 beschriebene Weise zu einem Laminat mit der gleichen Siegelschicht wie in Beispiel 1 weiterverarbeitet.

### Vergleichsbeispiel 6

Ein vorgefertigter Trägerfilm aus gerecktem Polyamid 6 der Stärke 15 µm wurde nach dein Verfahren aus Beispiel 1 gegen die ebenfalls in Beispiel 1 genannte Siegelschicht kaschiert.

An den Mustern wurden die Folgenden physikalischen Eigenschaften wie folgt gemessen:
- der E-Modul nach DIN EN ISO 527 bei a) einer Temperatur von 23°C und einer relativen Feuchte von 0% und b) einer Temperatur von 90°C und einer relativen Feuchte von 0% und c) einer Temperatur von 23 °C und einer relativen Feuchte von 50%. Die unterschiedlichen Klimata entsprechen dabei in etwa den Verhältnissen, denen eine Folie a) unmittelbar nach Abwicklung von der Rolle, b) nach der Vorwärmung in der Siegelstation einer Horizontalen Schlauchbeutelmaschine und c) nach längerem Stillstand der Maschine ausgesetzt ist.
- die Knickbruchfestigkeit bei einer Temperatur von 23°C und einer relativen Feuchte von 50%, indem ein Probenzuschnitt einlagig zu einem Zylinder der Lange 198 mm und einem Umfang von 280 mm aufgerollt und beidseitig in entsprechend geformten Halterungen eingespannt wird. Die freie Länge des von der Folie geformten Zylinders zwischen den Halterungen beträgt 192 mm. Unter gleichzeitiger Drehung um 440° um die den Zylinder beschreibende Symmetrieachse werden die Halterungen mit einer gegebenen Zahl von Zyklen und einer Frequenz von 35 Zyklen pro Minute auf einen Abstand von 40 mm einander angenähert. Die zu prüfenden Folien werden zuvor 7 Tage in einem Klima von 23°C und 50% relativer Luftfeuchte gehalten. Die Zahl der auf diese Weise in der Folie nach der vorgegebenen Zahl von Hüben entstandenen Knickbrüche läßt sich durch einseitiges Benetzen der Folie mit Ammoniaklösung bei gleichzeitigem Kontakt der anderen Folienseite zu einem Bogen Lichtpauspapier bestimmen. Die Zahl der nach 15 min erkennbaren, durch Ammoniak hervorgerufenen, blau-schwarzen Flecken auf dem Lichtpauspapier wird der Zahl der Knickbrüche im untersuchten Folienabschnitt zugeordnet. Der Wert wird dabei als Durchschnitt der Einzelwerte aus zwei Prüfmustern gewonnen.
- die Rollneigung der Folie bei einem Klima von 23°C und 50% relativer Luftfeuchte, indem ein in Längsrichtung der Folie entnommenes 15 mm x 100 mm langes Muster an der einen Schmalseite befestigt frei aufgehängt wird. Nach einer Stunde wird die Rollneigung sowohl in Längs- als auch in Querrichtung anhand der folgenden Kriterien qualitativ eingestuft. Dabei wird die in Langs- oder Querrichtung schlechteste Bewertung als Gesamteinschätzung verwendet.
   - kein oder kaum erkennbares Einrollen: +
   - deutlich sichtbares Einrollen, ohne daß die Folie sich selbst an irgendeiner Stelle berührt: 0
   - starkes Einrollen, so daß sich die Folie an mindestens einer Stelle selbst berührt: -

Die Ergebnisse sind in untenstehender Tabelle zusammengefaßt:

| | | Rollneigung | E-Modul [MPa] in Folienlängsrichtung | | | Knickbruchanzahl nach | |
|---|---|---|---|---|---|---|---|
| Folie nach | Reckung erforderlich? | 23°C, 50% r.F. | 23°C, 0% r.F. | 90°C, 0% r.F. | 23°C, 50% r.F. | 350 Hüben | 500 Hüben |
| Beispiel 1 | nein | + | 543 | 170 | 521 | 1,5 | 2,5 |
| Beispiel 2 | nein | + | 559 | 179 | 536 | 2 | 4 |
| Beispiel 3 | nein | + | 525 | 167 | 502 | 1 | 3,5 |
| Vergleichsbeispiel 4 | nein | - | 501 | 124 | 291 | 3 | 6 |
| Vergleichsbeispiel 5 | nein | - | 773 | 194 | 544 | 5 | 12,5 |
| Vergleichsbeispiel 6 | ja | - | 1526 | 471 | 785 | 0,5 | 1 |

## Patentansprüche

1. Siegelbare ungereckte Mehrschichtfolie, bestehend aus einer ein- oder mehrlagigen zusammenhängenden Schichtenfolge (1) an der Außenseite der Folie, einer ebenfalls wenigstens einlagigen zusammenhängenden Schichtenfolge (II), genannt Siegelschicht, an der anderen Außenseite der Folie sowie gegebenenfalls einer ebenfalls ein- oder mehrlagigen haftvermittelnden Schichtenfolge (III) zwischen den Schichtenfolgen (I) und (II), wobei die Mehrschichtfolie dadurch gekennzeichnet ist, daß die Schichtenfolge (I) mindestens eine Schicht (i) aus einem linearen alternierenden Copolymer (1) aus Kohlenmonoxid und wenigstens einem ethylenisch ungesättigten Olefin *sowie gegebenenfalls eine oder mehrere polyamidhaltige Schichten (ii) enthält,* dadurch gekennzeichnet, daß das Verhältnis zwischen den Dicken der Schichtenfolge (I) und der gesamten Mehrschichtfolie nicht größer als 0,6 und nicht kleiner als 0,15 ist, daß die Gesamtdicke der Mehrschichtfolie nicht unter 50 und nicht über 300 µm beträgt, und daß mindestens ein Schmelzpunkt, bestimmt mit der DSC-Methode nach ASTM 3418, einer in der Schichtenfolge (II) enthaltenen polymeren Komponente um wenigstens 50°C niedriger liegt als mindestens ein Schmelzpunkt, bestimmt mit der DSC-Methode nach ASTM 3418, eines in der Schichtenfolge (I) enthaltenen Polymers.

2. Folie nach Anspruch 1 mit einem Copolymer (1) aus Kohlenmonoxid und einem oder mehreren Olefinen aus der Gruppe umfassend Ethylen und C₃- bis C₁₀-Alkene wie beispielsweise Propylen, 1-Buten, 2-Buten, 1-Penten, 1-Hexen, 1-Octen, 1-Nonen, 1-Decen.

3. Folie nach Anspruch 2, wobei das Copolymer (1) ein Terpolymer (1.A) aus Kohlenmonoxid, Ethylen und Propylen ist

4. Folie nach Anspruch 3 mit einem Terpolymer (1.A) aus Kohlenmonoxid, Ethylen und Propylen mit in der Polymerkette statistisch verteilten Monomereinheiten des Ethylen (A) und Propylen (B), in dem das stöchiometrische Verhältnis B/A dieser monomeren Einheiten nicht über 0,5 beträgt.

5. Folie nach einem der Ansprüche 1 bis 4, wobei das Verhältnis zwischen den Dicken der Schichtenfolge (I) und der gesamten Mehrschichtfolie nicht größer als 0,4 und nicht kleiner als 0,2 ist.

6. Folie nach einem der Ansprüche 1 bis 5, wobei die Gesamtdicke der Mehrschichtfolie nicht unter 60 und nicht über 250 µm beträgt.

7. Folie nach einem der Ansprüche 1 bis 6, wobei mindestens ein Schmelzpunkt, bestimmt mit der DSC-Methode nach ASTM 3418, einer in der Schichtenfolge (II) enthaltenen polymeren Komponente um wenigstens 80°C niedriger liegt als mindestens ein Schmelzpunkt, bestimmt mit der DSC-Methode nach ASTM 3418, eines in der Schichtenfolge (I) enthaltenen Polymers.

8. Folie nach einem der Ansprüche 1 bis 6, wobei mindestens ein Schmelzpunkt, bestimmt mit der DSC-Methode nach ASTM 3418, einer in der Schichtenfolge (II) enthaltenen polymeren Komponente um wenigstens 110°C niedriger liegt als mindestens ein Schmelzpunkt, bestimmt mit der DSC-Methode nach ASTM 3418, eines in der Schichtenfolge (I) enthaltenen Polymers.

9. Folie nach einem der Ansprüche 1 bis 8, wobei die Schichtenfolge (I) aus nur einer Schicht (i) des linearen alternierenden Copolymers (1) aus Kohlenmonoxid und wenigstens einem ethylenisch ungesättigten Olefin besteht.

10. Folie nach einem der Ansprüche 1 bis 8, wobei die Schichtenfolge (I) aus einer oder mehreren Schichten (i), die ein Copolymer (1) enthalten, und einer oder mehreren polyamidhaltigen Schichten (ii) besteht.

11. Folie nach Anspruch 10, wobei die Schichtenfolge (I) nur eine Schicht (i) enthaltend ein lineares alternierendes Copolymer (1) aus Kohlenmonoxid und wenigstens einem ethylenisch ungesättigten Olefin, die beidseitig von polyamidhaltigen Schichten (ii) begrenzt wird, enthält.

12. Folie nach Anspruch 11, wobei die Schicht (i) beidseitig von je nur einer polyamidhaltigen Schicht (ii) begrenzt wird.

13. Folie nach einem der Ansprüche 10 bis 12, in der Schichtenfolge (I) durch Coextrusion hergestellt ist.

14. Folie nach einem der Ansprüche 10 bis 13, wobei die polyamidhaltigen Schichten (ii) Polyamid 6, Polyamid 10, Polyamid 12, Polyamid 66, Polyamid 610, Polyamid 6I, Polyamid 6/12, Polyamid 6/66, Polyamid 6I/6T, Polyamid MXD6, Polyamid 6/6I, Polyamid 6/6T oder Mischungen daraus enthalten.

15. Folie nach Anspruch 14, wobei die polyamidhaltigen Schichten (ii) Mischungen aus den Polyamiden nach Anspruch 14 mit mindestens 80 Gew-% Polyamid 6, bezogen auf das Gesamtgewicht der Mischung, enthalten.

16. Folie nach einem der Ansprüche 1 bis 15, wobei die Schicht oder die Schichten (i) aus einer Mischung (a), enthaltend 50 bis 100 Gewichtsanteile des Copolymers (1) und 0 bis 50 Gewichtsanteile eines Polyamids oder eines Ethylen/Vinylalkohol-Copolymerisates, besteht bzw. bestehen.

17. Folie nach Anspruch 16, wobei die Mischung (a) 80 bis 100 Gewichtsanteile des Copolymers (1) und 0 bis 20 Gewichtsanteile eines Polyamids (3) enthält.

18. Folie nach Anspruch 17, wobei das Polyamid (3) Polyamid 6 ist.

19. Folie nach einem der Ansprüche 1 bis 18, wobei die Schichtenfolge (II) aus mindestens einer Schicht besteht, die jeweils pro Schicht ein Polymer oder eine Mischung von Polymeren aus der Gruppe der Polyethylene (LDPE und HDPE), der Ethylen/α-Olefin-Copolymerisate (LLDPE), hergestellt mit konventionellen Ziegler-Natta-Katalysatoren bzw. mit Metallocen-Katalysatoren, Ethylen/Propylen-Copolymere, Ethylen/Vinylacetat-Copolymere (EVA), Ethylen-Copolymerisate mit ungesättigten Estern (EBA), Copolymerisate von Ethylen mit Acrylsäure oder Methacrylsäure, deren Metallsalze mit Zink oder Natrium und deren Alkyl(C₁-C₄)ester sowie gegebenenfalls Zusätze wie Siliziumoxid, Calciumcarbonat, Magnesiumsilikat, Aluminiumsilikat, Calciumphosphat, höhere aliphatische Säureamide, höhere aliphatische Säureester, Wachse, Metallseifen und/oder Polydimethylsiloxane enthält und/oder Polyethylen, Polypropylen, Ethylen/α-Olefin-Copolymerisate, oder Copolymerisate von Ethylen mit Vinylacetat oder Acrylsäure oder Methacrylsäure, die mit mindestens einem Monomer aus der Gruppe von Maleinsäure, Fumarsäure, Itaconsäure oder deren Säureanhydriden, Säureestern, Säureamiden und Säureimiden gepfropft sind, enthält.

20. Folie nach einem der Ansprüche 1 bis 19, wobei die haftvermittelnde Schichtenfolge (III) Polyethylen, Polypropylen oder Ethylen/α-Olefin-Copolymerisat, oder ein Ethylen/Vinylacetat-Copolymerisat enthält, das mit mindestens einem Monomer aus der Gruppe Maleinsäure, Fumarsäure, Itaconsäure oder deren Säureanhydriden, Säureestern, Säureamiden und Säureimiden gepfropft ist, und/oder Copolymerisate von Ethylen mit Acrylsäure, Methacrylsäure und/oder deren Metallsalze mit Zink oder Natrium und/oder deren Alkyl(C₁-C₄)ester oder entsprechende Pfropfpolymere auf Polyethylen` Polypropylen oder Ethylen/α-Olefin-Copolymerisate enthält, die mit einem Monomer aus der Gruppe Maleinsäure, Fumarsäure, Itaconsäure oder deren Säureanhydriden, Säureestern, Säureamiden und Säureimiden pfropfpolymerisiert sind.

21. Folie nach Anspruch 20, wobei die Schichtenfolge (III) nur eine Schicht umfaßt.

22. Folie nach Anspruch 21, wobei die haftvermittelnde Schicht (III) ein Ethylen/α-Olefin-Copolymerisat mit aufgepfropftem α,β-einfach ungesattigten Dicarbonsaureanhydrid enthält.

23. Folie nach Anspruch 22, wobei die haftvermittelnde Schicht (III) ein Ethylen/α-Olefin-Copolymerisat mit aufgepfropftem Maleinsäureanhydrid enthält.

24. Folie nach einem der Ansprüche 1 bis 10, wobei die haftvermittelnde Schichtenfolge (III) einschichtig ist und ein Polymer aus der Gruppe der linearen alternierenden Copolymere aus Kohlenmonoxid und wenigstens einem ethylenisch ungesättigten Olefin enthält.

25. Folie nach Anspruch 24, wobei das Copolymer ein Terpolymer aus Kohlenmonoxid, Ethylen und Propylen ist.

26. Folie nach einem direkt oder indirekt auf den Ansprüchen 4 und 25 basierenden Anspruch mit einem Terpolymer aus Kohlenmonoxid, Ethylen und Propylen mit in der Polymerkette statistisch verteilten Monomereinheiten des Ethylen (A) und Propylen (B), in dem das stöchiometrische Verhältnis B/A dieser monomeren Einheiten größer ist als Verhältnis B/A der monomeren Einheiten im Terpolymer (1.A) der Schichtenfolge (I).

27. Folie nach einem der Ansprüche 1 bis 19, wobei die haftvermittelnde Schicht ein Polymer aus der Gruppe der Polyurethane, Polyesterurethane oder Polyacrylate enthält.

28. Folie nach einem der Ansprüche 1 bis 27, die ein Druckbild enthält.

29. Verwendung der Folie nach einem der Ansprüche 1 bis 28 zur Herstellung von allseits geschlossenen Containern.

30. Verwendung der Folie nach einem der Ansprüche 1 bis 28 auf Schlauchbeutelmaschinen.

31. Verwendung der Folie nach einem der Ansprüche 1 bis 28 auf Horizontalen Schlauchbeutelmaschinen.

32. Verwendung der Folie nach einem der Ansprüche 1 bis 28 als Deckelfolie zur Herstellung von geschlossenen Containern zusammen mit einer thermogeformten Muldenfolie durch Versiegelung.

33. Verwendung der Folie nach einem der Ansprüche 1 bis 28 als Muldenfolie zur Herstellung von geschlossenen Containern zusammen mit einer Deckelfolie durch Versiegelung.

34. Verwendung der Folie nach einem der Ansprüche 1 bis 28 zur Verpackung von Lebensmitteln.
